# EUROPÄISCHE PATENTSCHRIFT

(11) **EP 0 899 144 B1**
(45) Veröffentlichungstag und Bekanntmachung des Hinweises auf die Patenterteilung: **02.05.2003**
(21) Anmeldenummer: 98116095.5
(22) Anmeldetag: 26.08.1998
(51) Int. Cl.: B60K 15/03, B60K 15/077, F02M 37/10

(54) **Sicherheitsvorrichtung für einen Kraftstoffbehälter**
Security device for a fuel tank
Dispositif de sécurité pour réservoir de carburant

(30) Priorität: 30.08.1997 DE 19737948; 25.08.1998 DE 19838555
(43) Veröffentlichungstag der Anmeldung: 03.03.1999
(73) Patentinhaber: Siemens Aktiengesellschaft, 80333 München (DE)
(72) Erfinder: Wehner, Holger, 60487 Frankfurt (DE); Ehinger, Jürgen, 60599 Frankfurt (DE); Bouton, Stephane, 57380 Pontpierre (FR); Gette, Christophe, 54300 Lunéville (FR)

(56) Entgegenhaltungen:
- EP-A- 0 754 852
- EP-A- 0 898 073
- WO-A-98/42973
- PATENT ABSTRACTS OF JAPAN vol. 1997, no. 01, 31. Januar 1997 (1997-01-31) & JP 08 232792 A (NIPPONDENSO CO LTD), 10. September 1996 (1996-09-10)
- PATENT ABSTRACTS OF JAPAN vol. 1997, no. 06, 30. Juni 1997 (1997-06-30) & JP 09 032674 A (DENSO CORP), 4. Februar 1997 (1997-02-04)

## Beschreibung

Gegenstand der Erfindung ist eine Sicherheitsvorrichtung zur Vermeidung elektrostatischer Aufladungen in Kraftstoffbehältern, insbesondere von Kraftfahrzeugen. Diese Sicherheitsvorrichtung wird an Bauelementen, vorzugsweise Kraftstoffilter und Druckregler, die sich im Innern eines Kraftstoffbehälters befinden, angeordnet.

In Kraftstoffbehältern heutiger Fahrzeuge sind eine Vielzahl unterschiedlicher Bauelemente angeordnet. Entsprechend ihrer Funktion werden einige von schnell strömendem Kraftstoff durchflossen. Dazu zählen Kraftstoffpumpen und neuerdings, bei sogenannten rücklauflosen Kraftstoffversorgungssystemen, der im Kraftstoffbehälter angeordnete Druckregler. Sowohl Kraftstoffpumpen als auch Druckregler besitzen Metallteile, die sich aufgrund des schnell durchfließenden Kraftstoffs elektrostatisch aufladen. Während diese elektrostatischen Aufladungen an der Kraftstoffpumpe über die elektrische Kontaktierung abgeleitet werden, besteht diese Möglichkeit bei einem Druckregler nicht, da er nur mit elektrisch isolierenden Kunststoffteilen in Verbindung steht. So ist die Gefahr gegeben, daß sich die elektrostatischen Aufladungen in Form eines elektrischen Überschlags abbauen, was in einem Kraftstoffbehälter zu einer gefährlichen Verpuffung führen kann.

Des weiteren sind auch Kraftstoffilter vom Kraftstoff durchflossene Bauelemente, bei denen die höheren Ansprüche an die Filtrierung des Kraftstoffs eine starke Verkleinerung der Maschenweite des Filters zur Folge hat. Eine damit einhergehende verstärkte Reibung zwischen dem schnellströmenden Kraftstoff und dem Filtergitter führt ebenfalls zu einer elektrostatischen Aufladung. Da die Filter oft ein Gehäuse oder einen Stützkörper aus einem nicht leitenden Kunststoff besitzen, wobei das eigentliche Filtergewebe entweder aus Kunststoff oder aus metallischem Werkstoff, z. B. aus einem Feindrahtgeflecht besteht, können auch hier die sich ansammelnden elektrostatischen Aufladungen nicht abgeführt werden.

Aus der nachveröffentlichten gattungsgemäßen, WO 98/42 973 ist es bekannt, ein Gehäuse des Druckreglers über eine Kabellitze mit einem Minuspol des Bordnetzes des Kraftfahrzeuges zu verbinden. Hierdurch werden im Druckregler auftretende elektrostatische Aufladungen abgeleitet. Diese Gestaltung der Sicherheitsvorrichtung führt jedoch zu einer aufwändigen Verlegung von Leitungen im Kraftstoffbehälter.

Ebenfalls ist es aus der JP 08 232792 A bekannt, verschiedene Aggregate über Leitungen miteinander zu verbinden, um elektrostatische Aufladungen abzuführen. Diese Gestaltung führt ebenfalls zu einer aufwändigen Verlegung einer Vielzahl von elektrischen Leitungen.

Der Erfindung liegt die Aufgabe zugrunde, den baulichen Aufwand bei der Vermeidung von elektrostatischen Aufladungen an Bauelementen in Kraftstoffbehältern möglichst gering zu halten.

Erfindungsgemäß wird die Aufgabe mit den Merkmalen des Patentanspruchs 1 gelöst. Vorteilhafte Ausgestaltungen sind in den Ansprüchen 2 bis 7 beschrieben.

Durch die Anordnung einer elektrisch leitfähigen Sicherheitsvorrichtung zwischen den Bauelementen im Kraftstoffbehälter und einem auf Massepotential liegenden Teils des Kraftfahrzeugs werden die elektrostatischen Aufladungen dieser Bauelemente wirksam abgeleitet.

Der Vorteil der Erfindung besteht darin, dass mit der Anordnung einer elektrisch leitfähigen Sicherheitsvorrichtung die Gefahr von Überschlägen im Kraftstoffbehälter ausgeschlossen ist. Die Anordnung dieser Sicherheitsvorrichtung hat den weiteren Vorteil, dass keine Veränderung der Bauelemente oder ihrer Anordnung notwendig ist und auch der Montageprozess bis auf die Sicherheitsvorrichtung unverändert bleibt, da das Gehäuse der Kraftstoffpumpe in der Regel ohnehin aus einem elektrisch leitfähigen Material gefertigt ist.

Besonders vorteilhaft ist es, wenn die elektrisch leitfähige Sicherheitsvorrichtung ein Draht ist, der einerseits mit den Bauelementen, z. B. Kraftstofffilter und Druckregler, und anandererseits mit einem auf Massepotential liegenden Teil des Kraftfahrzeuges verbunden ist.

Die Wirkung der Sicherheitsvorrichtung wird erhöht, wenn diese Verbindung möglichst kurz ist. So ist es vorteilhaft, bereits im Kraftstoffbehälter vorhandene Massepotentiale zu nutzen. Eines dieser Massepotentiale ist das elektrisch leitfähige Gehäuse der Kraftstoffpumpe, bzw. der Minuspol der Stromversorgung für die Kraftstoffpumpe oder der Minuspol der Stromversorgung eines Füllstandsgebers. Darüber hinaus ist die elektrisch leitende Verbindung durch die kurzen Wege kostengünstig.

Bei einem mit dem Gehäuse einer Kraftstoffpumpe verbundenen Kraftstoffilter könnte in einer weiteren Ausgestaltung der Erfindung der Stützkörper bzw. das Gehäuse des Kraftstoffilters selbst in an sich bekannter Weise aus Metall bestehen, was jedoch deutlich teurer als Kunststoffmaterial wäre.

Man könnte auch bei nicht leitfähigem Filtermaterial mit einer flächigen leitfähigen Beschichtung versuchen, die elektrische Aufladung abzuleiten. Wesentlich einfacher und kostengünstiger erreicht man den gewünschten Effekt, wenn das Filtermaterial selbst elektrisch leitfähig ist, z. B. in an sich bekannter Weise aus einem Feindrahtgeflecht oder aus einem elektrisch leitfähigen Kunststoff besteht.

Man könnte einen fliegenden elektrischen Leiter, z. B. eine Kabellitze, verwenden, der einerseits am Filtermaterial und andererseits am Pumpengehäuse elektrisch leitend zu befestigen wäre. Für die rasche und zuverlässig richtige Montage bringt es hingegen große Vorteile, wenn zumindest das pumpenseitige Ende der Sicherheitsvorrichtung so am Stützkörper oder Gehäuse fest angeordnet ist, daß es bei dessen Anschließen zwangsläufig mit dem Pumpengehäuse in elektrisch leitende Berührung kommt. Dann ist kein besonderer Handgriff zum Herstellen des elektrischen Kontakts notwendig.

Für eine störungsfreie Durchströmung des Kraftstoffilters ist gesorgt, wenn die Sicherheitsvorrichtung außerhalb des Strömungsquerschnitts des Anschlußbereichs zwischen Kraftstoffilter und Pumpe angeordnet ist. Bei einer innenliegenden Sicherheitsvorrichtung könnte es aufgrund von Turbulenzen und von unvermeidlichen Schwingungen der Flüssigkeitsströmung zu einer unerwünschten Geräuschentwicklung bzw.- verstärkung kommen.

Das dauerhaft zuverlässige Ableiten von Aufladungen wird gefördert, wenn die Sicherheitsvorrichtung federnd gegen das Pumpengehäuse vorgespannt ist. Des weiteren ist es für eine zuverlässige Kontaktierung von Vorteil, wenn die Sicherheitsvorrichtung zumindest mit einer scharfen Kante gegen das Pumpengehäuse anliegt, weil dann geringfügige, durch Schwingungen des Pumpengehäuses auftretende Relativbewegungen eventuell auftretende Oxidationsschichten zuverlässig beseitigen.

Ist das Bauelement ein Druckregler, ist ein Draht als elektrisch leitfähige Sicherheitsvorrichtung ebenfalls besonders vorteilhaft. Im einfachsten Fall ist der Draht am Teilgehäuse des Druckreglers angelötet. So werden keine weiteren Verbindungselemente benötigt.

Gemäß einer anderen vorteilhaften Weiterbildung der Erfindung wird der Draht an einem mit dem Druckregler verspannten Klemmring befestigt.

Zur weiteren Vereinfachung der Montage des Drahtes trägt es bei, wenn er an einem zur Montage des Druckreglers an einem Halteteil vorgesehenen Sicherungselement ohnehin zur Befestigung des Druckreglers erforderlich ist, sind hierdurch abgesehen von dem Draht keine zusätzlichen Bauteile erforderlich.

Die Sicherheitsvorrichtung ist gemäß einer weiteren vorteilhaften Ausgestaltung ein Halteteil für den Druckregler, das aus einem leitfähigen Kunststoff gefertigt ist und eine Verbindung mit einem auf Massepotential liegenden Teil des Kraftfahrzeuges hat.

Der Druckregler läßt sich mit allen daran anzuschließenden Bauteilen einfach zu einer vormontierbaren Einheit zusammenfassen und vor der Montage im Kraftstoffbehälter testen, wenn das Halteteil einteilig mit einer Fördereinheit gefertigt ist.

Die Erfindung läßt zahlreiche Ausführungsformen zu. Zur weiteren Verdeutlichung ihres Grundprinzips ist die Sicherheitsvorrichtung in Verbindung mit einem Kraftstoffilter und einem Druckregler in den Zeichnungen dargestellt.
Diese zeigen in:
- Fig. 1: eine schematische Darstellung einer Fördereinheit einer Kraftstoffversorgungsanlage mit einem Druckregler,
- Fig. 2 - 5: mehrere Ausführungsformen der elektrisch leitfähigen Sicherheitsvorrichtung an einem Druckregler, (Stand der Technik),
- Fig. 6: die elektrisch leitfähige Sicherheitsvorrichtung als Federspange an einem Kraftstoffilter und
- Fig. 7: die aus einer Feder und einem Kontakt bestehende elektrisch leitfähige Sicherheitsvorrichtung zwischen einem Kraftstoffilter und einer Kraftstoffpumpe.

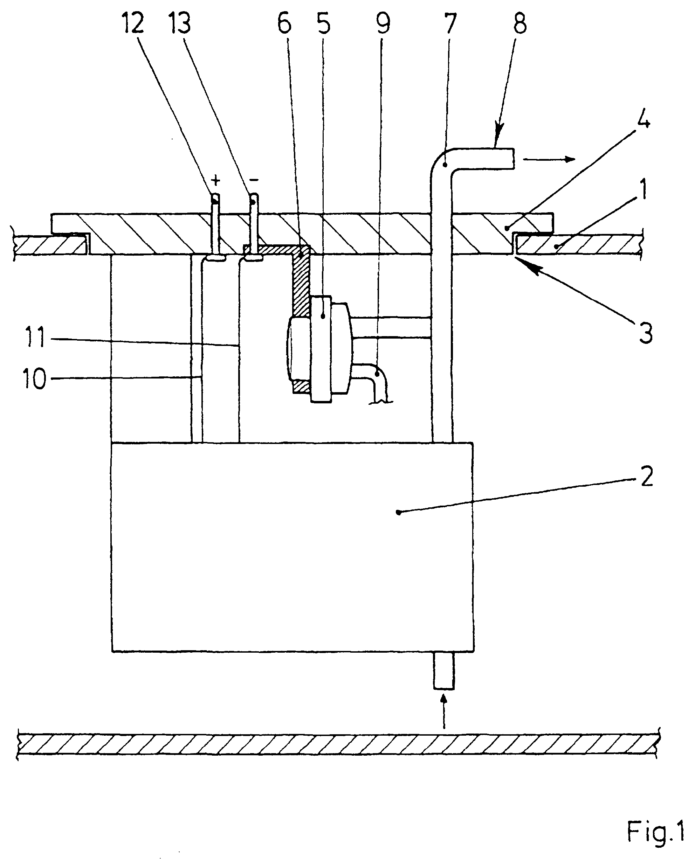

Die Figur 1 zeigt schematisch eine in einem Kraftstoffbehälter 1 eines Kraftfahrzeuges angeordnete Fördereinheit 2. Die Fördereinheit 2 ist an einem in eine Öffnung 3 des Kraftstoffbehälters 1 eingesetzten Flansch 4 befestigt. Weiterhin befindet sich in dem Kraftstoffbehälter 1 ein Druckregler 5. Der Druckregler 5 ist über ein Halteteil 6 an dem Flansch 4 befestigt. Die Fördereinheit 2 fördert Kraftstoff über eine Vorlaufleitung 7 zu einem außerhalb des Kraftstoffbehälters 1 befindlichen Anschluß 8. An diesem Anschluß 8 läßt sich eine nicht dargestellte, zu einer Brennkraftmaschine des Kraftfahrzeuges führende Vorlaufleitung anschließen. Der Druckregler 5 hat jeweils eine Verbindung mit der Vorlaufleitung 7 und mit einer in den Kraftstoffbehälter1 führenden Leitung 9. Die Fördereinheit 2 wird über elektrische Leitungen 10, 11 mit elektrischem Strom versorgt. Die elektrischen Leitungen 10, 11 haben eine Verbindung mit auf der Außenseite des Flansches 4 angeordneten Steckkontakten 12, 13. An dem den Minuspol bildenden Steckkontakt 13 ist das Halteteil 6 befestigt. Das Halteteil 6 ist aus leitfähigem Kunststoff gefertigt und hat Kontakt mit einem aus elektrisch leitfähigem Kunststoff gefertigten Gehäuseteil des Druckreglers 5. Damit wird eine elektrostatische Aufladung des Druckreglers 5 vermieden.

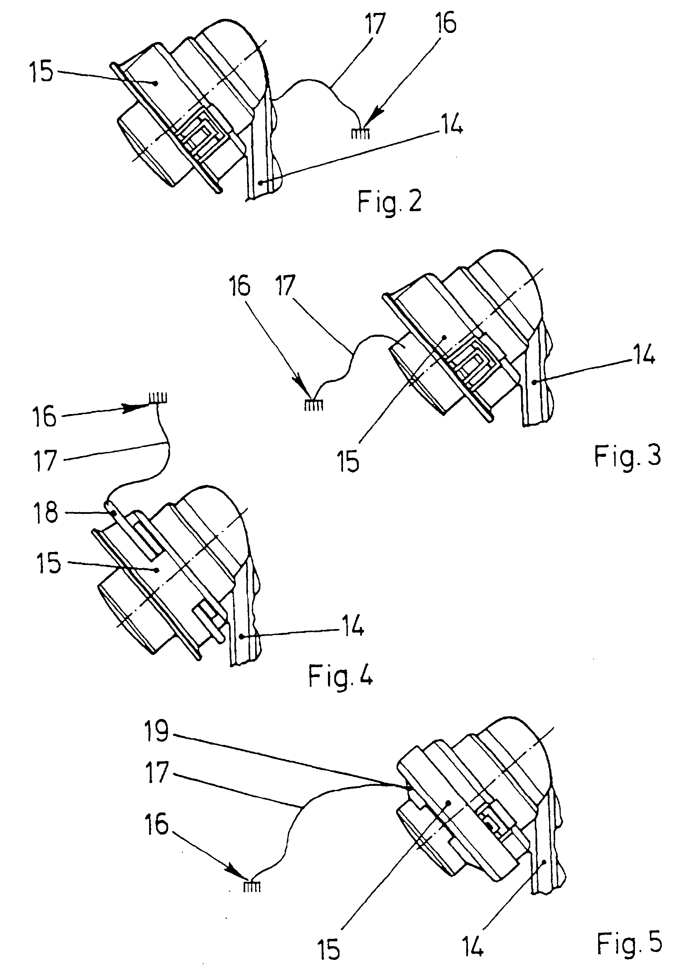

Die Figur 2 zeigt als Stand der Technik einen an einem Halteteil 14 befestigten Druckregler 15. Das Gehäuse des Druckreglers 15 ist aus Metall gefertigt und damit elektrisch leitfähig. Das Halteteil 14 besteht aus einem leitfähigen Kunststoff und ist bis zu einem auf Massepotential liegenden Punkt 16 mit einem Draht 17 verbunden.

Figur 3 (Stand der Technik) zeigt den Druckregler 15 und das Halteteil 14 aus Figur 2. Hierbei ist der mit dem auf Massepotential liegenden Punkt 16 verbundene Draht 17 unmittelbar an dem Gehäuse des Druckreglers 15 befestigt.

Die Figur 4 (Stand der Technik) zeigt den Druckregler 15 und das Halteteil 14 aus Figur 2. Hierbei ist der Druckregler 15 mittels einer aus Metall gefertigten Sicherungsklammer 18 an dem Halteteil 14 befestigt. Der zur Erdung des Druckreglers 15 mit dem auf Massepotential liegenden Punkt 16 verbundene Draht 17 ist hierbei an der Sicherungsklammer 18 befestigt.

Figur 5 (Stand der Technik) zeigt den Druckregler 15 und das Halteteil 14 aus Figur 2. Der zur Erdung des Druckreglers 15 mit dem auf Massepotential liegenden Punkt 16 verbundene Draht 17 ist an einem Klemmring 19 befestigt. Der Klemmring 19 ist kraftschlüssig an einem zylindrischen Abschnitt des Druckreglers 15 befestigt.

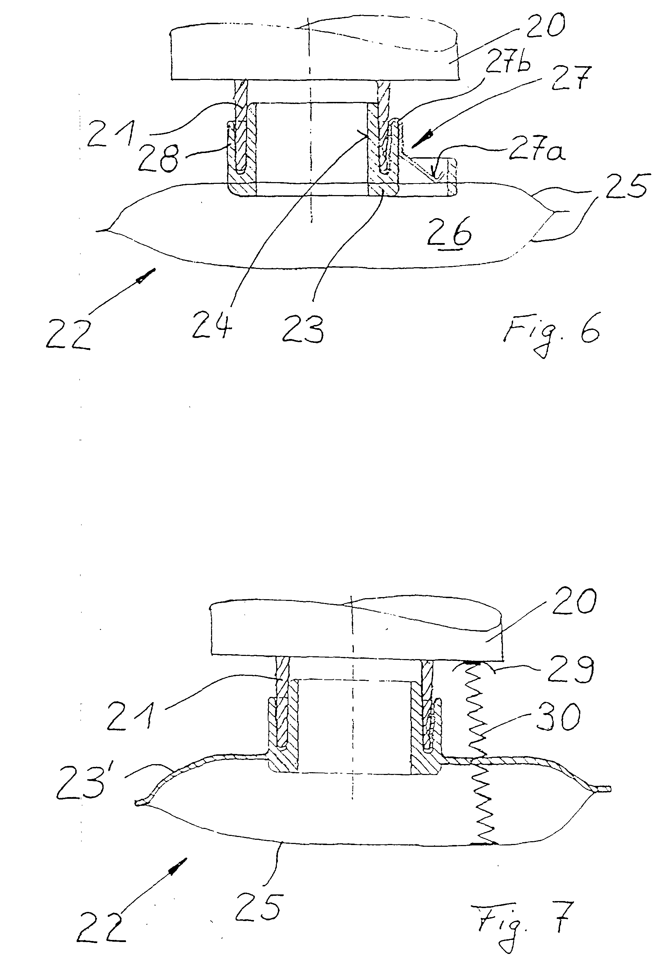

Gemäß Fig. 6 ist an ein nur teilweise gezeigtes metallisches Gehäuse 20 einer Pumpe ein Saugstutzen 21 einstückig angeformt oder jedenfalls elektrisch leitend damit verbunden. Das Gehäuse 20 ist in aller Regel mit der Fahrzeugmasse verbunden; meist bestehen derartige Gehäuse und Saugstutzen aus Aluminiumdruckguß.
Ein Filter 22 umfaßt einen Stützkörper 23 mit einem Anschlußstutzen 24 und ein mit dem Stützkörper 23 fest verbundenes, elektrisch leitfähiges Filtermaterial 25. Der Anschlußstutzen 24 ist auf den Saugstutzen 21 der selbstansaugenden Pumpe koaxial aufgesteckt. Das Filtermaterial 25 ist hier in bekannter Weise zweibahnig ausgeführt. Seine randseitig umlaufend fest verbundenen Bahnen schließen einen Hohlraum 26 zwischen sich ein, in den der Anschlußstutzen 24 ausmündet.

Beim Betrieb der Pumpe innerhalb eines Kraftstoffbehälters, wobei zumindest der untere Rand des Saugstutzens 21 noch von Flüssigkeit bedeckt ist, strömt angesaugte Flüssigkeit zunächst von allen Seiten durch das feinmaschige Filtermaterial 25 und dann durch den Anschlußstutzen 24 und den Saugstutzen 21 in das Gehäuse 20 hinein. Das Filtermaterial 25 kann sich dabei infolge von Reibung elektrostatisch mit hohen Spannungswerten aufladen. Dieser Effekt tritt vornehmlich, aber nicht ausschließlich beim Filtern des relativ viskosen Dieselkraftstoffs auf. Der hier beschriebene Filter ist aber nicht auf die Anwendung als Dieselfilter beschränkt.

Zur Ableitung der elektrostatischen Aufladungen ist nun mit dem Stützkörper 23 eine metallische Federspange 27 fest verbunden. Deren erstes Ende 27a liegt außerhalb des Hohlraums 26 mit Vorspannung auf der Oberseite des Filtermaterials 25 auf. Ein zweites Ende 27b der Federspange 27 ist nach Haarnadelart abgewinkelt. Ihre beiden Schenkel schließen einen Ringkragen 28 zwischen sich ein, der den Anschlußstutzen 24 koaxial außen umgibt.

Der zwischen dem Ringkragen 28 und dem Anschlußstutzen 24 liegende Schenkel des zweiten Federspangen-Endes 27b gerät beim Aufstecken des Filters 22 bzw. in dessen Einbauzustand zwangsläufig in Kontakt mit dem Saugstutzen 21 des Gehäuses 20. Damit ist eine elektrisch leitende Verbindung zwischen dem Filtermaterial 25 und dem Gehäuse 20 und damit zur Fahrzeugmasse hergestellt, die die Entstehung von elektrostatischen Aufladungen sicher unterbindet.

Die Filtervariante in Fig. 7 unterscheidet sich von Fig. 6 bei gleicher Funktion dadurch , daß hier ein Stützkörper 23' das ein- oder zweibahnige Filtermaterial 25 kuppelförmig überwölbt. Man kann also zum Ableiten elektrostatischer Aufladungen keine direkte Verbindung von der Oberseite des Filtermaterials 25.zum Gehäuse 20 herstellen. Schematisch ist hier angedeutet, daß statt dessen ein abgerundeter oder spitzer Filterkontakt 29 mittels einer elektrisch leitfähigen Druckfeder 30 von der Saugseite her an das Gehäuse 20 angedrückt wird, wobei die Druckfeder 30 den flächigen Stützkörper 23' ohne Kontakt mit dem Anschlußstutzen 24 durchdringt. Infolge von Schwingungen des Gehäuses 20 beim Betrieb der Pumpe wird der Filterkontakt 29 mit seiner kleinen Anlagefläche oder -kante geringfügige Reibebewegungen auf dem Gehäuse ausführen, so daß eine eventuell entstehende Oxidschicht sicher abgetragen wird und stets ein guter elektrischer Kontakt gewährleistet ist. Man kann die Druckfeder 30 mit dem Stützkörper 23' fest z. B. durch Einspritzen so verbinden, daß nur ihre freien Enden beweglich sind. Diese haben dann mit genügender Vorspannung einerseits auf dem Filtermaterial 25 aufzuliegen, andererseits den Filterkontakt 29 auf das Gehäuse 20 zu drükken.

Beide Varianten ist ferner gemeinsam, daß die jeweils als elektrisch leitfähige Sicherheitsvorrichtung ausgebildete Federspange 27 und Druckfeder 30 außerhalb des Strömungsquerschnitts im Stutzenbereich angeordnet sind, um Störungen der Saugströmung zu vermeiden.

## Patentansprüche

1. Sicherheitsvorrichtung für einen Kraftstoffbehälter, insbesondere für Kraftfahrzeuge, in dessen Inneren Bauelemente elektrisch isoliert angeordnet sind und von schnell strömendem Kraftstoff durchflossen sind, wobei die Sicherheitsvorrichtung (6, 17, 27, 30) elektrisch leitend ist und zwischen einem zu elektrostatischen Aufladungen neigendem Bauelement (5, 15, 22) und einem auf Massepotential liegendem Teil (13, 16, 20) angeordnet ist, **dadurch gekennzeichnet, dass** das auf Massepotential liegende Teil das Gehäuse einer Kraftstoffpumpe (20) ist und dass eine Seite der Sicherheitsvorrichtung (27a) gegen das Bauelement (5, 15, 22) oder das auf Massepotential liegende Teil (13, 16, 20) vorgespannt ist.

2. Sicherheitsvorrichtung nach Anspruch 1, **dadurch gekennzeichnet, dass** das auf Massepotential liegende Teil (13, 16, 20) im Kraftstoffbehälter (1) angeordnet ist.

3. Sicherheitsvorrichtung nach Anspruch 1 und 2, **dadurch gekennzeichnet, dass** das auf Massepotential liegende Teil (13, 16) der Minuspol einer Stromversorgung (13) ist.

4. Sicherheitsvorrichtung nach Anspruch 1 bis 3, **dadurch gekennzeichnet, dass** die Sicherheitsvorrichtung ein Draht (17) ist.

5. Sicherheitsvorrichtung nach Anspruch 1 bis 4, **dadurch gekennzeichnet, dass** die Sicherheitsvorrichtung ein aus leitfähigem Kunststoff bestehendes Teil (6) ist.

6. Sicherheitsvorrichtung nach mindestens einem der Ansprüche 1 bis 5, **dadurch gekennzeichnet, dass** die Sicherheitsvorrichtung ein Federelement (30) umfaßt, das im Einbauzustand zwischen dem Bauelement (5, 15, 22) und dem auf Massepotential liegenden Teil (13, 16, 20) angeordnet ist.

7. Sicherheitsvorrichtung nach mindestens einem der Ansprüche 1 bis 6, **dadurch gekennzeichnet, dass** die Sicherheitsvorrichtung (6) einteilig mit einem auf Massepotential liegenden Teil (20) gefertigt ist.

## Claims

1. Safety device for a fuel tank, in particular for motor vehicles, components being electrically insulated, and having fuel flowing quickly through them, in the interior of the said fuel tank, the safety device (6, 17, 27, 30) being electrically conductive and being arranged between a component (5, 15, 22) which tends to have electrostatic charges and a part (13, 16, 20) which is at earth potential, **characterized in that** the part which is at earth potential is the housing of a fuel pump (20), and **in that** one side of the safety device (27a) is prestressed against the component (5, 15, 22) or the part (13, 16, 20). which is at earth potential.

2. Safety device according to Claim 1, **characterized in that** the part (13, 16, 20) which is at earth potential is arranged in the fuel tank (1),

3. Safety device according to Claims 1 and 2, **characterized in that** the part (13, 16) which is at earth potential is the negative pole of a power supply (13).

4. Safety device according to Claims 1 to 3, **characterized in that** the safety device is a wire (17).

5. Safety device according to Claims 1 to 4, **characterized in that** the safety device is a part (6) which is composed of conductive plastic.

6. Safety device according to at least one of Claims 1 to 5, **characterized in that** the safety device comprises a spring element (30) which is arranged, in the installed state, between the component (5, 15, 22) and the part (13, 16, 20) which is at earth potential.

7. Safety device according to at least one of Claims 1 to 6, **characterized in that** the safety device (6) is fabricated in one piece with a part (20) which is at earth potential.

## Revendications

1. Dispositif de sécurité pour un réservoir à carburant, en particulier pour un véhicule automobile, à l'intérieur duquel des éléments sont isolés électriquement et traversés par un flux de carburant rapide, le dispositif de sécurité (6, 17, 27, 30) étant électriquement conducteur et monté entre un élément susceptible de se charger électrostatiquement (5, 15, 22) et une pièce reliée au potentiel de la masse (13, 16, 20), **caractérisé en ce que** la pièce reliée au potentiel de la masse est le boîtier d'une pompe à carburant (20) et qu'un côté du dispositif de sécurité (27a) est mis en tension contre l'élément (5, 15, 22) ou contre la pièce au potentiel de la masse (13, 16, 20).

2. Dispositif de sécurité selon la revendication 1, **caractérisé en ce que** la pièce au potentiel de la masse (13, 16, 20) est montée dans le réservoir à carburant (1).

3. Dispositif de sécurité selon les revendications 1 et 2, **caractérisé en ce que** la pièce au potentiel de la masse (13, 16) est le pôle négatif d'une alimentation électrique (13).

4. Dispositif de sécurité selon les revendications 1 à 3, **caractérisé en ce que** le dispositif de sécurité est un fil (17).

5. Dispositif de sécurité selon les revendications 1 à 4, **caractérisé en ce que** le dispositif de sécurité est une pièce en plastique conducteur (6).

6. Dispositif de sécurité selon au moins l'une des revendications 1 à 5, **caractérisé en ce que** le dispositif de sécurité comprend un élément à ressort (30) qui, lorsque le dispositif est monté, se trouve entre l'élément (5, 15, 22) et la pièce au potentiel de la masse (13, 15, 20).

7. Dispositif de sécurité selon au moins l'une des revendications 1 à 6, **caractérisé en ce que** le dispositif de sécurité (6) est fabriqué d'un seul bloc avec une pièce au potentiel de la masse (20).
